# EUROPEAN PATENT SPECIFICATION

(11) **EP 1 996 850 B1**
(45) Date of publication and mention of the grant of the patent: **24.04.2013**
(21) Application number: 06707565.5
(22) Date of filing: 15.03.2006
(51) Int. Cl.: F16K 31/126, F16K 7/17, F16K 11/048

(54) **VALVE WITH A SPRINGY DIAPHRAGM**
VENTIL MIT FEDERMEMBRAN
SOUPAPE AVEC UN DIAPHRAGME ELASTIQUE

(43) Date of publication of application: 03.12.2008
(73) Proprietor: Norgren GmbH, 46519 Alpen (DE)
(72) Inventor: TSCHÜRTZ, Andreas, 73434 Aalen (DE)
(74) Representative: Hartwell, Ian Peter
(86) International application number: PCT/EP2006/002378
(87) International publication number: WO 2007/104334

(56) References cited:
- DE-U1- 8 108 750
- GB-A- 993 971
- GB-A- 2 020 786
- GB-A- 2 023 258
- US-A- 3 768 515

## Description

### RELATED APPLICATIONS

This application is related to applications "A rocker type diaphragm valve" and "A one piece double membrane diaphragm" filed on the same day as this application and hereby included by reference into this application.

### BACKGROUND OF THE INVENTION

### 1. FIELD OF THE INVENTION

The invention is related to the field of valves, and in particular, to an improved diaphragm valve.

### 2. DESCRIPTION OF THE PRIOR ART

Poppet valves can be stacked together to form control system see for example GB 20 23 258.The width of the poppet valve is typically known as the slice width. Reducing the slice width allows more valves to be placed in the same amount of space. Some valves, for example a 5/2 monostable valve, require the valve to return to a default position in the absence of an activation force. The return force for the valve is typically supplied by a spring. Springs take up space.

Therefore there is a need for a diaphragm poppet valve having a default position without requiring a separate spring.

### SUMMARY OF THE INVENTION

A diaphragm is disclosed that has a shape that spring loads the diaphragm during assembly to provide a default position for the diaphragm. The diaphragm is made from a resilient material. The diaphragm is spring loaded during assembly to provide a force that returns the diaphragm to the default position.

### BRIEF DESCRIPTION OF THE DRAWINGS

FIG. 1 is a cross sectional view of a typical prior art diaphragm valve 100.
FIG. 2 is an isometric sectional view of a diaphragm valve 200 in an example embodiment of the invention.
FIG. 3 is an isometric sectional view of valve body 306 in an example embodiment of the invention.
FIG. 4a is a top view of upper diaphragm membrane 412 in an example embodiment of the invention.
FIG. 4b is a sectional view AA of upper diaphragm membrane 412 in an example embodiment of the invention.

### DETAILED DESCRIPTION OF THE PREFERRED EMBODIMENT

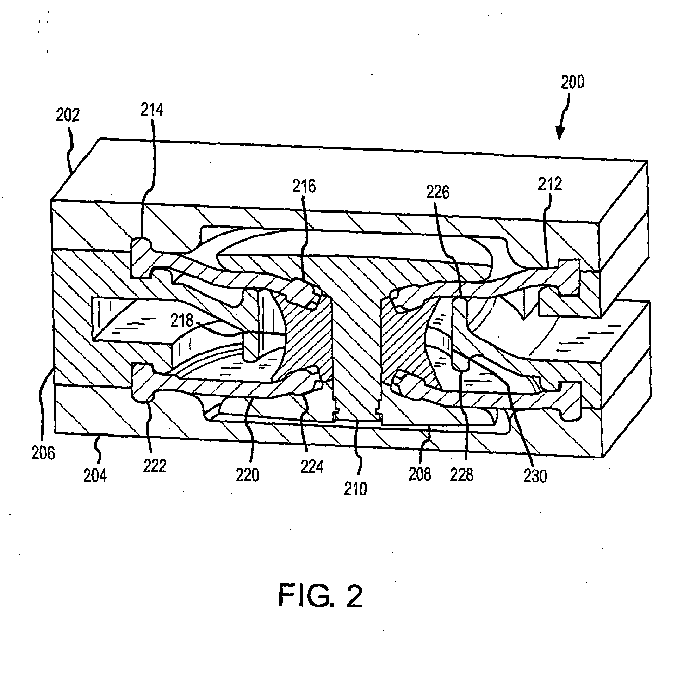

Figures 2 - 4 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention. As a result, the invention is not limited to the specific examples described below, but only by the claims.

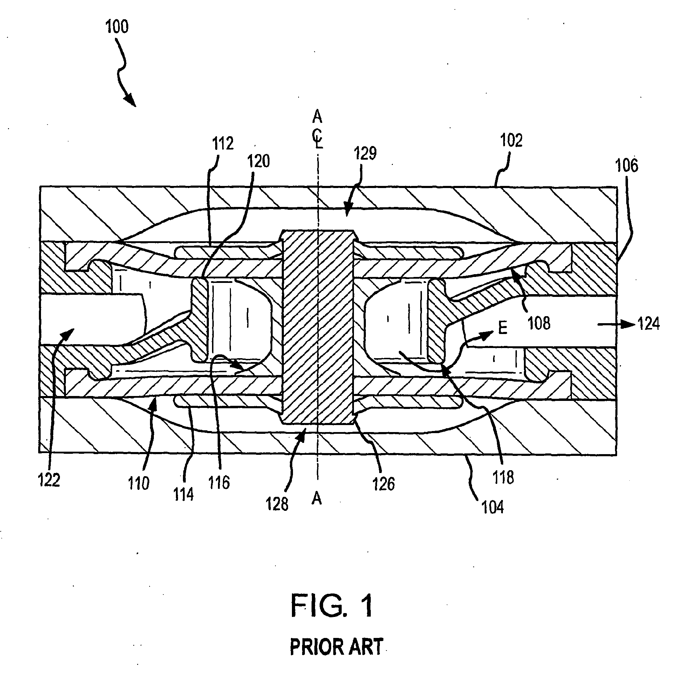

Figure 1 is a cross sectional view of a typical 3/2 function diaphragm valve 100. Diaphragm valve 100 comprises top plate 102, bottom plate 104, valve body 106, top diaphragm membrane 108, bottom diaphragm membrane 110, top retaining ring 112, bottom retaining ring 114, spacer 116, center spool 126, upper sealing surface 120, lower sealing surface 118, inlet opening 122 and exhaust 124. A diaphragm assembly is comprised of top diaphragm disk 108, bottom diaphragm disk 110, top retaining ring 112, bottom retaining ring 114, spacer 116 and center spool 126. The parts in the diaphragm assembly are generally circular in nature and are symmetric about center line AA. Top plate 102 is attached to valve body 106 capturing top diaphragm disk 108 in a gap between the top plate 102 and valve body 106. Bottom plate 104 is attached to valve body 106 capturing bottom diaphragm disk 110 in a gap between the bottom plate 104 and valve body 106. Upper and lower sealing surfaces are generally circular in nature with each sealing surface formed in a plane. The sealing surfaces may also be called valve seats. The two planes containing the two sealing surfaces are generally parallel to each other.

Valve 100 is shown in the off or closed position with top diaphragm disk 108 contacting upper sealing surface 120 and having a gap between bottom diaphragm disk 110 and lower sealing surface 118. The gap between the bottom diaphragm disk 110 and the lower sealing surface is uniform in height. In the closed position fluid from an outlet opening (not shown) flows through the gap between the bottom diaphragm disk 110 and lower sealing surface 118 and out through exhaust 124 (as shown by arrow E). In the on position the central part of the diaphragm assembly is shifted upward such that the bottom diaphragm disk 110 contacts lower sealing surface 118 and a gap is formed between top diaphragm disk 108 and upper sealing surface 120. The gap between the top diaphragm disk 108 and the upper sealing surface is uniform in height. In the on position, fluid flows from inlet opening 122 through the gap between top diaphragm disk 108 and upper sealing surface 120, into an outlet opening (not shown). The two diaphragm disks flex or deform as the central part of the diaphragm assembly is shifted between the open and closed positions. There is generally radial symmetry in the deformation of the two diaphragm disks. The radial symmetry forms concentric circles of constant deflection in the two diaphragm disks.

Figure 2 is an isometric sectional view of a 3/2 function diaphragm valve 200 in an example embodiment of the invention. Diaphragm valve 200 comprises top plate 202, bottom plate 204, valve body 206, upper diaphragm membrane 212, lower diaphragm membrane 220, spindle 210, spindle cap 208 and spacer 218. Top sealing surface 226 and bottom sealing surface 228 are formed in valve body 206. In one example embodiment of the invention, each sealing surface is formed in one plane. Upper diaphragm membrane 212 has outer rim 214 attached to the outer edge of the diaphragm membrane and inner rim 216 attached to the inner edge of the diaphragm membrane. Lower diaphragm membrane 220 has outer rim 222 attached to the outer edge of the diaphragm membrane and inner rim 224 attached to the inner edge of the diaphragm membrane. The inner and outer rims on the two diaphragm membranes are optional. Other methods may be used to hold the diaphragm membranes into the valve or into the spindle. For example, a groove or channel may be formed in the outer edge of the diaphragm membrane and a lip or bead may be formed on the top plate that fits into the groove. A diaphragm assembly comprises the upper and lower diaphragm membranes (212 and 220), spindle 210, spacer 218 and spindle cap 208. The spacer is optional or may be integrated into spindle.

To assemble the diaphragm assembly the upper diaphragm membrane 212 is inserted onto the spindle 210. Spacer 218 is the inserted onto spindle 210, capturing the inner rim 216 of upper diaphragm membrane between spindle 210 and spacer 218. In one example embodiment of the invention, the spindle may be inserted into central opening 230 in valve body 206. In other example embodiments of the invention, the diaphragm assembly may not be inserted into central opening 230 until fully assembled. Lower diaphragm membrane is now inserted onto spindle 210. Spindle cap 208 is inserted onto, and attached to, spindle 210, capturing inner rim 224 between spacer 218 and spindle cap 208.

When the diaphragm assembly is installed into diaphragm valve 200, the two outer rims (222 and 214) are captured between the valve body and the upper and lower plates (202 and 204) respectively. In one example embodiment of the invention, the upper and lower outer rims seat into grooves formed into the top and bottom surfaces of the valve body 206. In one example embodiment of the invention, top plate 202 and bottom plate 204 are attached to valve body 206 by laser welding. Other attachment methods may be used to attach the top and bottom plates to valve body 204.

In operation, diaphragm assembly moves between two positions, an upper position and a lower position. The deflection of diaphragm 228 is generally radially symmetric about the center of the diaphragm assembly. In the upper diaphragm position (not shown), lower diaphragm membrane 220 contacts and seals against the bottom sealing surface 228. Upper diaphragm membrane 212 is positioned away from top sealing surface 226, leaving a gap between the upper diaphragm membrane 212 and the top sealing surface 226. The gap between the upper diaphragm membrane 208 and the top sealing surface 226 is generally a constant width (i.e. the gap is typically uniform).

In the lower diaphragm position, upper diaphragm membrane 212 contacts and seals against the top sealing surface 226. Lower diaphragm membrane 220 is positioned away from bottom sealing surface 228, leaving a gap between the lower diaphragm membrane 220 and the bottom sealing surface 228.

Diaphragm assembly is typically moved between the upper position and the lower position using an activation force created by pressure from a pilot or control fluid (not shown). The control fluid is introduced into the gap between the upper diaphragm membrane 212 and the top plate 202 to force the diaphragm into the lower position. The control fluid is introduced into the gap between the lower diaphragm membrane 220 and the bottom plate 204 to force the diaphragm into the upper position. When there is no activation force applied to either area, the diaphragm is configured to snap or return to a default position. The diaphragm is configured such that the default position is the lower diaphragm position. In some cases, the spring force may not be strong enough to return the diaphragm to the default position if the source supply is still active. Typically, the source supply is also used for the control supply, so when there is no pressure into the valve, both the control and the source will be inactive and the diaphragm will return to the default position. In one example embodiment of the invention, upper diaphragm membrane 212 is made from a resilient material, for example polyurethane, rubber, spring steel, or the like. The resilient material allows upper diaphragm membrane 212 to be assembled into the valve such that the resilient diaphragm material and the shape of upper diaphragm membrane 212 interacting with the valve body 206 and top plate 202 creates a spring force that returns the diaphragm to a default position. In another example embodiment of the invention, both the upper and lower diaphragm membranes are used to create the spring force. The lower diaphragm membrane would be made from a resilient material and also have a curved or bowl shape that would be aligned with the curved or bowl shape of the upper diaphragm membrane to help create a spring force when the diaphragm is installed into the valve. The method used to move the diaphragm between the upper and lower position is not important and other methods besides a pilot fluid may be used, for example a plunger activated by a coil and attached to the diaphragm.

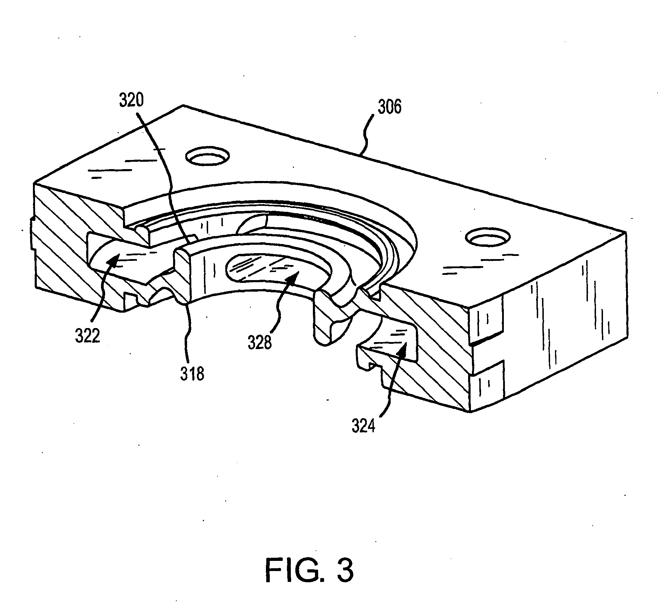

Figure 3 is an isometric sectional view of valve body 306 in an example embodiment of the invention. Valve body 306 forms three ports or openings, port 322, port 328 and port 324, top sealing surface 320 and bottom sealing surface 318. Depending on the configuration of the valve, the ports may be used as an inlet port, an outlet port, or an exhaust port. When a diaphragm (not shown) is in the upper position, fluid enters port 322, flows over the top of top sealing surface 320 between a gap formed between the upper diaphragm membrane and the top sealing surface, and then flows into port 328. When the diaphragm (not shown) is in the lower position, fluid exits port 328, flows underneath the bottom sealing surface 318 between the gap formed between the lower diaphragm membrane and the bottom sealing surface 318, and then flows into port 324.

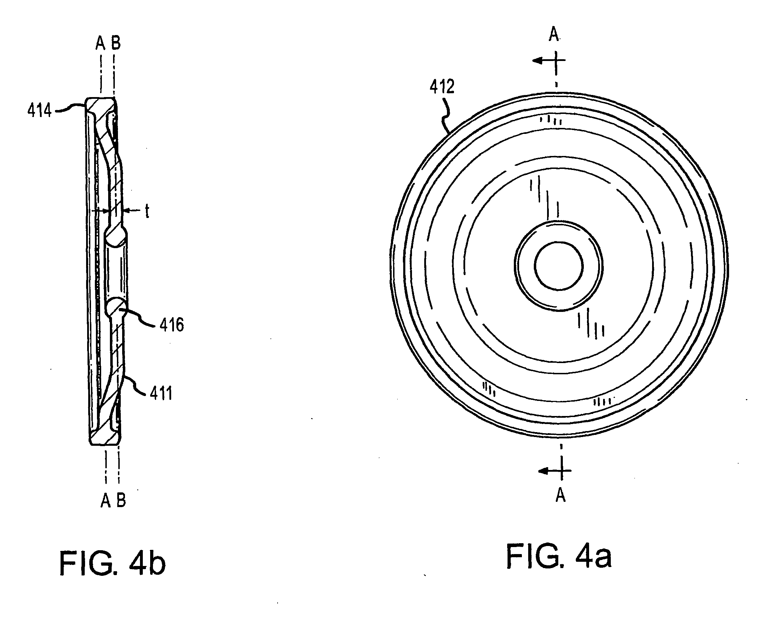

Figure 4 is a drawing of an upper diaphragm membrane 412 in an example embodiment of the invention. In one example embodiment of the invention, upper diaphragm membrane 412 is a generally circular part. In other example embodiments of the invention, the upper diaphragm membrane 412 may be oval or rectangular in shape. Other shapes are also possible. Figure 4a is a top view of upper diaphragm membrane 412 in an example embodiment of the invention.

Figure 4b is a sectional view AA of upper diaphragm membrane 412 in an example embodiment of the invention. Upper diaphragm membrane 412 comprises an outer rim 414, an inner rim 416 and a diaphragm membrane 411 having a thickness t. The outer rim 414 is configured to fit into a gap between the top plate and the valve body of the valve. The outer rim helps hold the diaphragm assembly in place in the valve and create a seal between the diaphragm assembly and the valve. Diaphragm membrane 411 is coupled to outer rim 414 along the inner diameter of outer rim 414. Diaphragm membrane 411 is coupled to inner rim 416 along the outer diameter of inner rim 414. Upper diaphragm membrane 412 is made from a resilient material, for example rubber, polyurethane, spring steel, or the like. Outer rim 414 is formed essentially in one plane shown as AA. Inner rim 416 is formed in essentially one plane shown as BB that is offset, but generally parallel to plane AA. The offset between the inner rim and the outer rim, the diaphragm membrane thickness t, and the diaphragm material generate the force that returns the diaphragm assembly to the first, or default, position when the diaphragm assembly is installed into the valve.

## Claims

1. A diaphragm valve, comprising:
a diaphragm assembly configured to move along a stroke axis between a first position and a second position;
the diaphragm assembly having an upper diaphragm membrane (212) and a lower diaphragm membrane (220) where the upper and lower diaphragm membranes are held in a spaced apart relationship by a spindle (210) and where at least the upper diaphragm membrane is fabricated from a resilient material;
a valve body (206) forming a top sealing surface (226) and a bottom sealing surface (228);
the upper diaphragm membrane (212) configured to seal against the top sealing surface (226) when the diaphragm assembly is in the first position;
the lower diaphragm membrane (220) configured to seal against the bottom sealing surface (228) when the diaphragm assembly is in the second position;
a top plate (202) attached to a top side of the valve body (206) where an outer edge of the upper diaphragm membrane is held between the valve body (206) and the top plate (202); **characterized by**:
the upper diaphragm membrane (212) having a curved shape where a center of the upper diaphragm membrane (212) extends below a plane defined by the outer edge of the upper diaphragm membrane (212) causing the diaphragm assembly to be urged towards the first position when the diaphragm assembly is installed in the diaphragm valve and in the first position or the second position.

2. The diaphragm valve of claim 1 further comprising:
a top rim (214) attached to and surrounding the upper diaphragm membrane (212) and forming a seal between the valve body (206) and the top plate (202);
a bottom rim (222) attached to and surrounding the lower diaphragm membrane (220) and forming a seal between the valve body (206) and a bottom plate (204),

3. The diaphragm valve of claim 1 where the upper diaphragm membrane (212) is essentially circular in shape.

4. The diaphragm valve of claim 1 where the upper diaphragm membrane (212) is essentially oval in shape.

5. The diaphragm valve of claim 1 where the upper diaphragm membrane (212) is essentially rectangular in shape.

6. The diaphragm valve of claim 1 where the upper diaphragm membrane (212) is made from polyurethane.

7. The diaphragm valve of claim 1 where the lower diaphragm membrane (220) is fabricated from a resilient material and has a curved shape where a center of the lower diaphragm membrane extends below a plane defined by the outer edge of the lower diaphragm membrane causing the diaphragm assembly to be urged towards the first position when the diaphragm assembly is installed in the diaphragm valve.

8. A method for spring loading a diaphragm valve, comprising:
installing a lower diaphragm membrane onto a first end of a spindle;
inserting the spindle into a central opening in a valve body;
installing an upper diaphragm membrane onto a second end of the spindle in a spaced apart relationship with the lower diaphragm membrane; where the
upper diaphragm membrane is bowl shaped and made from a resilient material;
the valve body (206) forming a top sealing surface (226) and a bottom sealing surface (228); the upper diaphragm membrane (212) configured to seal against the top sealing surface (226) when the diaphragm assembly is in the first position; the lower diaphragm membrane (220) configured to seal against the bottom sealing surface (228) when the diaphragm assembly is in the second position;
attaching a top plate to a top side of the valve body capturing an edge of the upper diaphragm membrane between the top plate and the top side of the valve body where a center of upper diaphragm membrane (212) extends below a plane defined by the outer edge of the upper diaphragm membrane (212) such that the resilient material and shape of the upper diaphragm membrane creates a spring force for spring loading the upper diaphragm membrane into the first position whether the diaphragm valve is in a first position or a second position.

9. The method of claim 8 where the top plate is attached to the top side of the valve body by laser welding.

10. The method of claim 8, further comprising:
installing a spacer onto the spindle between the upper and lower diaphragm membranes.

11. The method of claim 8, further comprising:
installing a spindle cap onto the spindle.

12. The method of claim 8, further comprising:
seating a rim attached to the upper diaphragm membrane into a groove formed into the top side of the valve body before the top plate is attached to the valve body, where the groove in the top side surrounds the central opening;
seating a rim attached to the lower diaphragm membrane intro a groove formed into a bottom side of the valve body before a bottom plate is attached to the valve body, where the groove in the bottom side surrounds the central opening.

## Patentansprüche

1. Membranventil, das Folgendes umfasst:
eine Membranbaugruppe, die für eine Bewegung entlang einer Hubachse zwischen einer ersten Position und einer zweiten Position konfiguriert ist;
wobei die Membranbaugruppe eine obere Membran (212) und eine untere Membran (220) aufweist, wobei die obere und die untere Membran durch eine Spindel (210) in einer beabstandeten Beziehung gehalten werden und wobei wenigstens die obere Membran aus einem elastischen Material gefertigt ist;
einen Ventilkörper (206), der eine obere Dichtungsfläche (226) und eine untere Dichtungsfläche (228) bildet;
wobei die obere Membran (212) zum Abdichten gegen die obere Dichtungsfläche (226) konfiguriert ist, wenn sich die Membranbaugruppe in der ersten Position befindet;
wobei die untere Membran (220) zum Abdichten gegen die untere Dichtungsfläche (228) konfiguriert ist, wenn die Membranbaugruppe in der zweiten Position ist;
eine obere Platte (202), die an einer Oberseite des Ventilkörpers (206) angebracht ist, wo ein Außenrand der oberen Membran zwischen dem Ventilkörper (206) und der oberen Platte (202) gehalten wird; **dadurch gekennzeichnet, dass**:
die obere Membran (212) eine gekrümmte Form hat, wo eine Mitte der oberen Membran (212) unterhalb einer Ebene verläuft, die durch den Außenrand der oberen Membran (212) definiert wird und bewirkt, dass die Membranbaugruppe in Richtung der ersten Position gedrückt wird, wenn die Membranbaugruppe in dem Membranventil installiert und in der ersten Position oder der zweiten Position ist.

2. Membranventil nach Anspruch 1, das ferner Folgendes umfasst:
eine obere Randfassung (214), die an der oberen Membran (212) angebracht ist und diese umgibt und eine Dichtung zwischen dem Ventilkörper (206) und der oberen Platte (202) bildet;
eine untere Randfassung (222), die an der unteren Membran (220) angebracht ist und sie umgibt und eine Dichtung zwischen dem Ventilkörper (206) und einer unteren Platte (204) bildet.

3. Membranventil nach Anspruch 1, wobei die obere Membran (212) im Wesentlichen kreisförmig ist.

4. Membranventil nach Anspruch 1, wobei die obere Membran (212) im Wesentlichen oval geformt ist.

5. Membranventil nach Anspruch 1, wobei die obere Membran (212) im Wesentlichen rechteckig geformt ist.

6. Membranventil nach Anspruch 6, wobei die obere Membran (212) aus Polyurethan gefertigt ist.

7. Membranventil nach Anspruch 1, wobei die untere Membran (220) aus einem elastischen Material gefertigt ist und eine gekrümmte Form hat, wo eine Mitte der unteren Membran unterhalb einer Ebene verläuft, die durch den Außenrand der unteren Membran definiert wird und bewirkt, dass die Membranbaugruppe in Richtung der ersten Position gedrückt wird, wenn die Membranbaugruppe im Membranventil installiert ist.

8. Verfahren zum Federbelasten eines Membranventils, das Folgendes beinhaltet:
Installieren einer unteren Membran an einem ersten Ende einer Spindel;
Einführen der Spindel in eine zentrale Öffnung in einem Ventilkörper;
Installieren einer oberen Membran an einem zweiten Ende der Spindel in einer beabstandeten Beziehung zur unteren Membran; wobei
die obere Membran schüsselförmig ist und aus einem elastischen Material gefertigt ist;
wobei der Ventilkörper (206) eine obere Dichtungsfläche (226) und eine untere Dichtungsfläche (228) bildet;
wobei die obere Membran (212) zum Abdichten gegen die obere Dichtungsfläche (226) konfiguriert ist, wenn die Membranbaugruppe in der ersten Position ist;
wobei die untere Membran (220) zum Abdichten gegen die untere Dichtungsfläche (228) konfiguriert ist, wenn die Membranbaugruppe in der zweiten Position ist;
Anbringen einer oberen Platte an einer Oberseite des Ventilkörpers und dabei Einklemmen eines Randes der oberen Membran zwischen der oberen Platte und der Oberseite des Ventilkörpers, wo eine Mitte der oberen Membran (212) unterhalb einer Ebene verläuft, die durch den Außenrand der oberen Membran (212) definiert wird, so dass das elastische Material und die Form der oberen Membran eine Federkraft zum Federbelasten der oberen Membran in die erste Position erzeugt, ob das Membranventil in einer ersten Position oder in einer zweiten Position ist.

9. Verfahren nach Anspruch 8, wobei die obere Platte durch Laserschweißen an der Oberseite des Ventilkörpers angebracht wird.

10. Verfahren nach Anspruch 8, das ferner das Installieren eines Abstandshalters an der Spindel zwischen der oberen und der unteren Membran beinhaltet.

11. Verfahren nach Anspruch 8, das ferner das Installieren einer Spindelkappe an der Spindel beinhaltet.

12. Verfahren nach Anspruch 8, das ferner Folgendes beinhaltet:
Setzen einer an der oberen Membran angebrachten Randfassung in eine Nut, die in der Oberseite des Ventilkörpers ausgebildet ist, bevor die obere Platte am Ventilkörper angebracht wird, wo die Nut in der Oberseite die zentrale Öffnung umgibt;
Setzen einer an der unteren Membran angebrachten Randfassung in eine Nut, die in einer Bodenseite des Ventilkörpers ausgebildet ist, bevor eine untere Platte am Ventilkörper angebracht wird, wo die Nut in der Bodenseite die zentrale Öffnung umgibt.

## Revendications

1. Soupape à diaphragme, comprenant :
un ensemble diaphragme configuré pour se déplacer le long d'un axe de course entre une première position et une deuxième position ;
l'ensemble diaphragme comportant une membrane de diaphragme supérieure (212) et une membrane de diaphragme inférieure (220), la membrane de diaphragme supérieure et la membrane de diaphragme inférieure étant maintenues espacées l'une de l'autre par une tige (210) et au moins la membrane de diaphragme supérieure étant fabriquée dans un matériau élastique ;
un corps de valve (206) formant une surface d'étanchéité supérieure (226) et une surface d'étanchéité inférieure (228) ;
la membrane de diaphragme supérieure (212) étant configurée pour faire étanchéité contre la surface d'étanchéité supérieure (226) quand l'ensemble diaphragme est dans la première position ;
la membrane de diaphragme inférieure (220) étant configurée pour faire étanchéité contre la surface d'étanchéité inférieure (228) quand l'ensemble diaphragme est dans la deuxième position ;
une plaque supérieure (202) fixée à un côté supérieur du corps de valve (206), un bord externe de la membrane de diaphragme supérieure étant maintenu entre le corps de valve (206) et la plaque supérieure (202) ; **caractérisée en ce que** :
la membrane de diaphragme supérieure (212) a une forme courbe, un centre de la membrane de diaphragme supérieure (212) s'étendant en dessous d'un plan délimité par le bord externe de la membrane de diaphragme supérieure (212) en poussant l'ensemble diaphragme à se déplacer vers la première position quand l'ensemble diaphragme est installé dans la soupape à diaphragme et se trouve dans la première position ou dans la deuxième position.

2. Soupape à diaphragme selon la revendication 1, comprenant en outre :
un rebord supérieur (214) fixé à et entourant la membrane de diaphragme supérieure (212) et formant un joint d'étanchéité entre le corps de valve (206) et la plaque supérieure (202) ;
un rebord inférieur (222) fixé à et entourant la membrane de diaphragme inférieure (220) et formant un joint d'étanchéité entre le corps de valve (206) et une plaque inférieure (204).

3. Soupape à diaphragme selon la revendication 1, la membrane de diaphragme supérieure (212) étant essentiellement de forme circulaire.

4. Soupape à diaphragme selon la revendication 1, la membrane de diaphragme supérieure (212) étant essentiellement de forme ovale.

5. Soupape à diaphragme selon la revendication 1, la membrane de diaphragme supérieure (212) étant essentiellement de forme rectangulaire.

6. Soupape à diaphragme selon la revendication 1, la membrane de diaphragme supérieure (212) étant en polyuréthane.

7. Soupape à diaphragme selon la revendication 1, la membrane de diaphragme inférieure (220) étant fabriquée dans un matériau élastique et ayant une forme courbe, un centre de la membrane de diaphragme inférieure s'étendant en dessous d'un plan délimité par le bord externe de la membrane de diaphragme inférieure en poussant l'ensemble diaphragme à se déplacer vers la première position quand l'ensemble diaphragme est installé dans la soupape à diaphragme.

8. Procédé de chargement par ressort d'une soupape à diaphragme, consistant à :
installer une membrane de diaphragme inférieure sur une première extrémité d'une tige ;
insérer la tige dans une ouverture centrale dans un corps de valve ;
installer une membrane de diaphragme supérieure sur une deuxième extrémité de la tige en l'espaçant de la membrane de diaphragme inférieure ; la membrane de diaphragme supérieure étant en forme de bol et se composant d'un matériau élastique ; le corps de valve (206) formant une surface d'étanchéité supérieure (226) et une surface d'étanchéité inférieure (228) ;
la membrane de diaphragme supérieure (212) étant configurée pour faire étanchéité contre la surface d'étanchéité supérieure (226) quand l'ensemble diaphragme est dans la première position ;
la membrane de diaphragme inférieure (220) étant configurée pour faire étanchéité contre la surface d'étanchéité inférieure (228) quand l'ensemble diaphragme est dans la deuxième position ;
fixer une plaque supérieure à un côté supérieur du corps de valve en bloquant un bord de la membrane de diaphragme supérieure entre la plaque supérieure et le côté supérieur du corps de valve, un centre de la membrane de diaphragme supérieure (212) s'étendant en dessous d'un plan délimité par le bord externe de la membrane de diaphragme supérieure (212) de telle sorte que le matériau élastique et la forme de la membrane de diaphragme supérieure créent une force de ressort pour le chargement par ressort de la membrane de diaphragme supérieure la poussant jusqu'à la première position, que la soupape à diaphragme se trouve dans une première position ou dans une deuxième position.

9. Procédé selon la revendication 8, la plaque supérieure étant fixée au côté supérieur du corps de valve par soudage au laser.

10. Procédé selon la revendication 8, consistant en outre à :
installer une pièce d'écartement sur la tige entre la membrane de diaphragme supérieure et la membrane de diaphragme inférieure.

11. Procédé selon la revendication 8, consistant en outre à :
installer un capuchon de tige sur la tige.

12. Procédé selon la revendication 8, consistant en outre à :
disposer un rebord fixé à la membrane de diaphragme supérieure de telle sorte qu'il repose dans une gorge formée dans le côté supérieur du corps de valve avant la fixation de la plaque supérieure au corps de valve, la gorge formée dans le côté supérieur entourant l'ouverture centrale ;
disposer un rebord fixé à la membrane de diaphragme inférieure de telle sorte qu'il repose dans une gorge formée dans un côté inférieur du corps de valve avant la fixation d'une plaque inférieure au corps de valve, la gorge formée dans le côté inférieur entourant l'ouverture centrale.
